# EUROPEAN PATENT APPLICATION

(11) **EP 4 756 661 A1**
(43) Date of publication of application: **10.06.2026**
(21) Application number: 25219865.0
(22) Date of filing: 01.12.2025
(51) Int. Cl.: G06F 30/20, G06N 5/022, G06F 119/02

(54) **WORK SIMULATION APPARATUS, WORK SIMULATION SYSTEM, AND WORK SIMULATION METHOD**

(30) Priority: 06.12.2024 JP 2024214030
(71) Applicant: Hitachi, Ltd., Tokyo 100-8280 (JP)
(72) Inventor: KAWAMURA, Riku, Tokyo, 100-8280 (JP); ISHIDA, Hitoshi, Tokyo, 100-8280 (JP); HAGIWARA, Takehiro, Tokyo, 100-8280 (JP); MURO, Keiro, Tokyo, 100-8280 (JP)
(74) Representative: Mewburn Ellis LLP

(57) **Abstract**

The present invention addresses the problem of enabling the inheritance of skilled knowledge by generating a knowledge graph from a restoration work report and a skilled worker's work simulation in a virtual space, and appending skilled knowledge to the restoration work report using the knowledge graph and a Large Language Model (LLM).

A work simulation system (110) allows a user to select, via an operation unit (105), a scene stored in a scene storage unit (120) in which a work simulation is to be performed within a virtual space (100). The system generates a knowledge graph based on a restoration work report stored in a restoration work report storage unit (140) and the work simulation, appends skilled knowledge to the restoration work report using the generated knowledge graph, and optionally determines standard work for the same case by using all knowledge graphs stored in a knowledge graph storage unit (130).

## Description

### BACKGROUND OF THE INVENTION

### 1. Field of the Invention

The present invention relates to, for example, a work simulation apparatus, a work simulation system, and a work simulation method.

### 2. Description of the Related Art

In recent years, skilled engineers responsible for maintaining railway infrastructure have been retiring, raising concerns about the inheritance of their expertise. Consequently, many software applications have been developed that utilize Extended Reality (XR) technologies-such as Virtual Reality (VR), Augmented Reality (AR), and Mixed Reality (MR)-to facilitate the transfer of expert knowledge.

U.S. Patent Application Publication No. 2023/0162736 discloses a 3D simulation system that utilizes a metaverse space to perform simulations within arbitrary virtual environments. This system enables the accumulation and extraction of expert knowledge triggered by voice input. Furthermore, Japanese Patent Application Publication No. 2024-80494 discloses a system that synchronizes a real space with a virtual space to manage information such as work progress. However, these two patent documents do not take into account the actual motions and behaviors of skilled workers. The knowledge handled therein merely represents what experts consider to be ordinary work procedures. Consequently, knowledge that would be recognized as expert know-how from the perspective of novice workers has not been accumulated.

Furthermore, Jingwei Ji et al., "Action Genome: Actions as Composition of Spatio-temporal Scene Graphs," [online], December 15, 2019, Stanford University, available at https://arxiv.org/abs/1912.06992, discloses a technique for constructing a scene graph-an aggregate of triplets consisting of Subject, Relation, and Object-from video data, thereby clarifying the relationships between people and objects. By doing so, a technique is disclosed that allows Visual Question Answering (VQA) to be performed on video data. However, when this technique is applied in domains such as railway maintenance or manufacturing, where domain-specific tools are used, there arises a problem in that an appropriate scene graph cannot be constructed.

### SUMMARY OF THE INVENTION

During simulations using XR, users mainly exchange opinions based on their existing knowledge, and log data such as restoration work reports are often not utilized. Furthermore, restoration work reports are typically written after the restoration work is completed, relying on the worker's memory, and therefore may lack detailed operational information-such as which tools were used and how they were handled-that constitutes expert knowledge. In addition, safety assurance has relied on the personal experience of skilled workers, and there has been a problem in that it cannot be quantitatively evaluated.

In view of the foregoing problems, one object of the present invention is to provide a work simulation apparatus, a work simulation system, and a work simulation method capable of accumulating and inheriting expert knowledge in railway infrastructure maintenance work.

In order to solve the above-described problems and achieve the stated objectives, one embodiment of the present invention provides a work simulation apparatus that includes a reproduction unit that reproduces a scene in a virtual space; a generation unit that generates a knowledge graph based on an input restoration work report and a work simulation; and a determination unit that interprets the generated knowledge graph, appends expert knowledge to the restoration work report, and analyzes all of the knowledge graphs to determine whether the work is standard or non-standard.

Another embodiment of the present invention provides a work simulation system that includes a virtual space; a scene storage unit that stores scenes; a work restoration report storage unit that stores work restoration reports; a knowledge graph storage unit that stores knowledge graphs; a selection unit that selects, from among the scenes stored in the scene storage unit, a scene in which a work simulation is to be performed in the virtual space; a knowledge graph generation unit that generates a knowledge graph based on a work restoration report stored in the work restoration report storage unit and a work simulation; and a determination unit that uses the knowledge graph generated by the knowledge graph generation unit to append expert knowledge to the work restoration report and, optionally, analyzes all of the knowledge graphs stored in the knowledge graph storage unit to determine whether the work in a given case is standard or non-standard.

Furthermore, another embodiment of the present invention provides a work simulation method for simulating work by a work simulation apparatus, the method including a reproduction step of reproducing a scene in a virtual space; a generation step of generating a knowledge graph based on a restoration work report and a work simulation stored in a memory; and a determination step of interpreting the knowledge graph, appending expert knowledge to the restoration work report, and analyzing all of the knowledge graphs to determine whether the work is standard or non-standard.

According to the present invention, it becomes possible to inherit expert knowledge by generating a knowledge graph based on a restoration work report and a skilled worker's work simulation in a virtual space, and by appending expert knowledge to the restoration work report using the knowledge graph and a large language model. In addition, the safety of workers can be quantitatively evaluated through musculoskeletal analysis.

### BRIEF DESCRIPTION OF THE DRAWINGS

Fig. 1 is a block diagram illustrating an overview of a work simulation system according to Embodiment 1 of the present invention.
Fig. 2 is a block diagram illustrating an example of a network configuration to which an overall system for the work simulation system according to Embodiment 1 of the present invention is applied.
Fig. 3 is an explanatory diagram illustrating an example of a restoration work report for a railway accident in Embodiment 1 of the present invention.
Fig. 4 is a block diagram illustrating an example of a functional configuration of the overall system according to Embodiment 1 of the present invention.
Fig. 5 is an explanatory diagram illustrating an example in which an expert knowledge inheritance column is appended to a restoration work report for a railway accident in Embodiment 1 of the present invention.
Fig. 6 is a flowchart illustrating an example of a procedure by which the knowledge graph generation unit generates a knowledge graph in Embodiment 1 of the present invention.
Fig. 7 is an explanatory diagram illustrating an example of a knowledge graph related to a work flow extracted from a restoration work report in Embodiment 1 of the present invention.
Fig. 8 is an explanatory diagram illustrating an example in which an unrecognized object exists in a scene graph in Embodiment 1 of the present invention.
Fig. 9 is a flowchart illustrating an example of a procedure for predicting the name of an unrecognized object using a Vision-Language Model (VLM) in Embodiment 1 of the present invention.
Fig. 10 is an explanatory diagram illustrating an image of extracting context from a knowledge graph in Embodiment 1 of the present invention.
Fig. 11 is an explanatory diagram illustrating an image of estimating an unrecognized object using a VLM in Embodiment 1 of the present invention.
Fig. 12 is an explanatory diagram illustrating an image of complementing from another existing scene graph based on graph similarity in Embodiment 1 of the present invention.
Fig. 13 is an explanatory diagram illustrating an example of an additional training dataset for a scene graph generation AI in Embodiment 1 of the present invention.
Fig. 14 is an explanatory diagram illustrating an image of appending expert knowledge in the knowledge graph interpretation unit in Embodiment 1 of the present invention.
Fig. 15 is an explanatory diagram illustrating an example in which knowledge graphs are combined for determining whether the work is standard or non-standard in the knowledge graph analysis unit in Embodiment 2 of the present invention.
Fig. 16 is an explanatory diagram illustrating an example of a user's viewpoint screen in a virtual space in Embodiment 2 of the present invention.
Fig. 17 is an explanatory diagram illustrating an image of a knowledge graph generated by the knowledge graph generation unit in Embodiment 2 of the present invention.

### DESCRIPTION OF THE PREFERRED EMBODIMENTS

Hereinafter, embodiments of the present invention will be described with reference to the drawings. It should be noted that the following description and drawings are provided merely as examples for explaining the present invention, and certain portions may be omitted or simplified as appropriate for clarity of explanation. The present invention can also be implemented in various other forms. Unless otherwise specified, each component may be either singular or plural.

In the following description, identical or similar components are denoted by the same reference numerals, and redundant explanation thereof may be omitted. In addition, in the following description, various kinds of information may be explained using expressions such as "information" or "table," but such information may be represented in other data structures as well. Further, as expressions for identification information, the terms "identification information," "identifier," "name," "ID," and "number" may be used interchangeably. In the following description, the term "database" is abbreviated as "DB," and the term "table" is abbreviated as "TBL."

### [Embodiment 1]

### [Overview of the Embodiment]

An embodiment 1 of the present invention will now be described with reference to the drawings. It should be noted that Embodiment 1 described below does not limit the invention defined in the claims, and not all of the elements or combinations of elements described in Embodiment 1 are necessarily essential to the means for solving the invention.

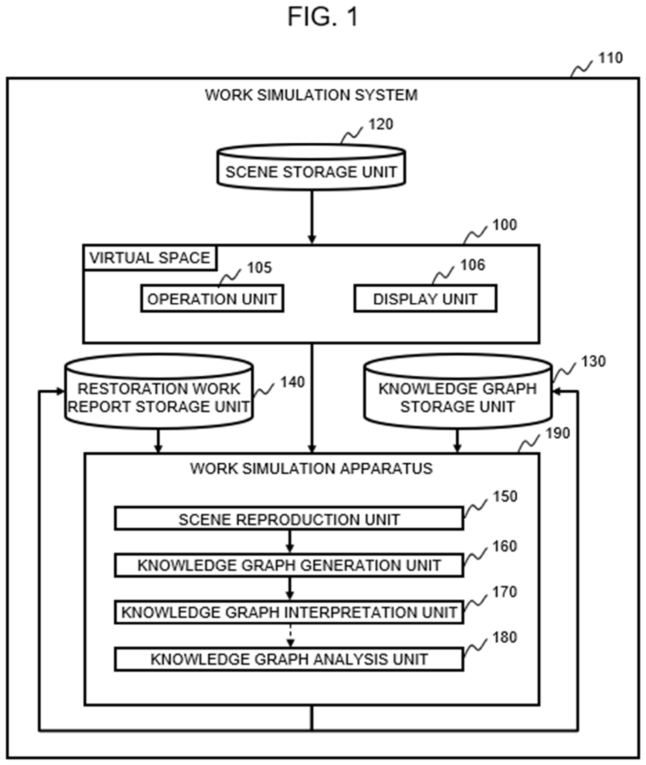

Fig. 1 illustrates an overview of an embodiment according to Embodiment 1 of the present invention. A work simulation system 110 includes: a virtual space 100 that is displayed on a display unit 106 and receives operation input through an operation unit 105; a work simulation apparatus 190 including a scene reproduction unit 150, a knowledge graph generation unit 160, a knowledge graph interpretation unit 170, and a knowledge graph analysis unit 180; a scene storage unit 120; a knowledge graph storage unit 130; and a restoration work report storage unit 140, among other components.

In the work simulation system 110, when a user selects, via the operation unit 105 in the virtual space 100, a scene stored in the scene storage unit 120 on which a work simulation is to be performed, the work simulation apparatus 190 performs a work simulation on the selected scene and, using the work simulation together with a restoration work report stored in the restoration work report storage unit 140, sequentially executes processing by the scene reproduction unit 150, the knowledge graph generation unit 160, and the knowledge graph interpretation unit 170. The knowledge graph generated by the knowledge graph generation unit 160 is stored in the knowledge graph storage unit 130, and the knowledge graph analysis unit 180 performs an analysis process using all of the knowledge graphs stored in the knowledge graph storage unit 130. In the work simulation system 110, the processing of the work simulation apparatus 190 is implemented in software by executing a program described later.

### [Block Diagram]

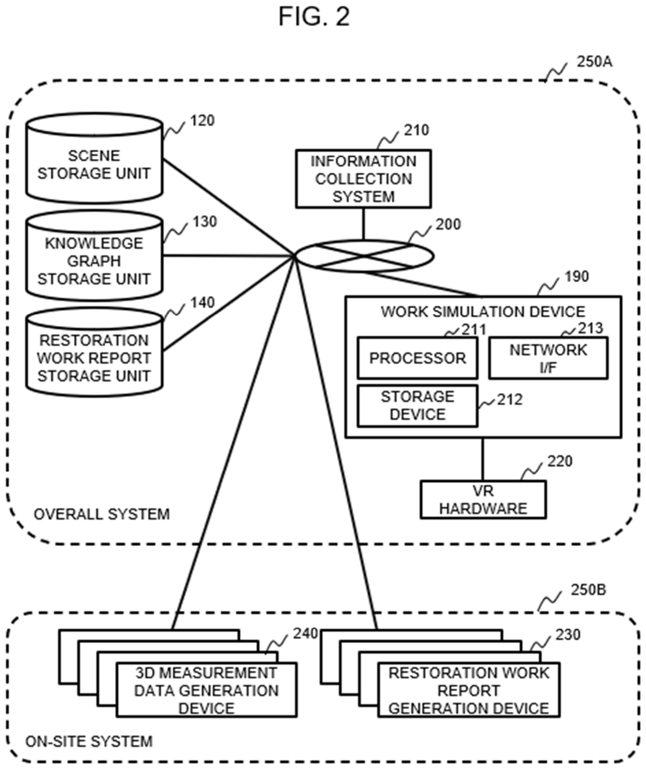

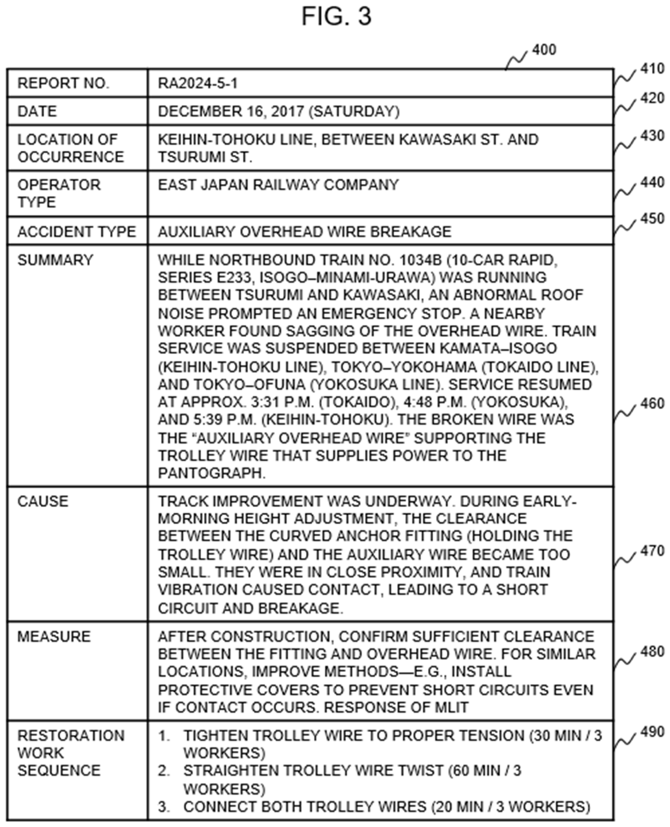

Fig. 2 is a block diagram illustrating an example of a network configuration to which the work simulation apparatus 190 according to Embodiment 1 is applied, and Fig. 3 is an explanatory diagram illustrating an example of a restoration work report for a railway accident in Embodiment 1.

The work simulation apparatus 190 is connected to a network 200. Connected to the network 200 are one or more scene storage units 120, one or more knowledge graph storage units 130, one or more restoration work report storage units 140, one or more restoration work report generation devices 230, and one or more 3D measurement data generation devices 240. The restoration work report generation device 230 and the 3D measurement data generation device 240 correspond to an on-site system 250B that acquires data at a work site.

The work simulation apparatus 190, the scene storage unit 120, the knowledge graph storage unit 130, the restoration work report storage unit 140, the restoration work report generation device 230, and the 3D measurement data generation device 240 are connected to an information collection system 210 via the network 200. Although the main components of the work simulation system 110 are constituted by the work simulation apparatus 190, as shown in Fig. 2, the overall system 250A may also be referred to as a "work simulation system" in a broader sense.

The work simulation apparatus 190 is connected to VR hardware 220, which enables a user to connect to the work simulation apparatus 190 through data communication. The VR hardware 220 is used by various users, including experienced users who accumulate expert knowledge and junior users who inherit such knowledge, and may consist of one or more information terminal devices. Furthermore, the work simulation apparatus 190 and the VR hardware 220 may be connected via the network 200, thereby allowing access to the work simulation apparatus 190 from any location outside the overall system 250A.

The restoration work report generation device 230 is a device that generates log data of restoration work created when an accident or failure occurs. The restoration work report generation device 230 may be, for example, a personal computer (PC) or a server. The restoration work report generation device 230 may be centrally managed or distributedly managed.

As shown in Fig. 3, a restoration work report 400 accumulated in the restoration work report generation device 230 includes columns such as a report number 410, occurrence date 420, occurrence location 430, operator category 440, type of accident or failure 450, summary 460, cause 470, countermeasure 480, and restoration work procedure 490. The restoration work reports generated or collected by the restoration work report generation device 230 are transmitted to and stored in the restoration work report storage unit 140 via the network 200.

The 3D measurement data generation device 240 is a device that generates 3D measurement data used for precisely reproducing an actual work site in a virtual space. The term 3D measurement data refers to data that accurately represents, in three dimensions, the shapes and positions of objects and spaces acquired using measurement technologies such as laser surveying, photogrammetry, Light Detection and Ranging (LiDAR), or a 3D scanner. Alternatively, the 3D measurement data may be a 3D CAD model constructed using a game engine such as Unity or Unreal Engine.

The scene storage unit 120 is, for example, a storage device such as a server or memory that stores 3D measurement data received from the 3D measurement data generation device 240 via the network 200. The knowledge graph storage unit 130 is, for example, a storage device such as a server or memory that stores knowledge graphs generated by the knowledge graph generation unit via the network 200. The restoration work report storage unit 140 is, for example, a storage device such as a server or memory that stores restoration work reports received from the restoration work report generation device 230 via the network 200.

### [System Configuration]

Next, the main functions of the work simulation apparatus 190 will be described. As shown in Fig. 2, the work simulation apparatus 190 includes a processor 211 such as a central processing unit (CPU) that performs overall control of the work simulation apparatus 190, a storage device 212 that stores various processing programs for realizing the functions of the work simulation apparatus 190, and a network interface (I/F) 213, among other components. The storage device 212 is implemented using known storage devices such as a read-only memory (ROM) that stores various processing programs, a primary storage device (RAM: Random Access Memory) that temporarily stores information, and a hard disk drive (HDD).

By executing various processing programs stored in the storage device, the processor 211 realizes the functions of the present invention described below. It should be noted that the configuration of the work simulation apparatus 190 is not limited to the example illustrated, and part or all of the programs may be provided from another device through a non-transitory storage medium or a communication line.

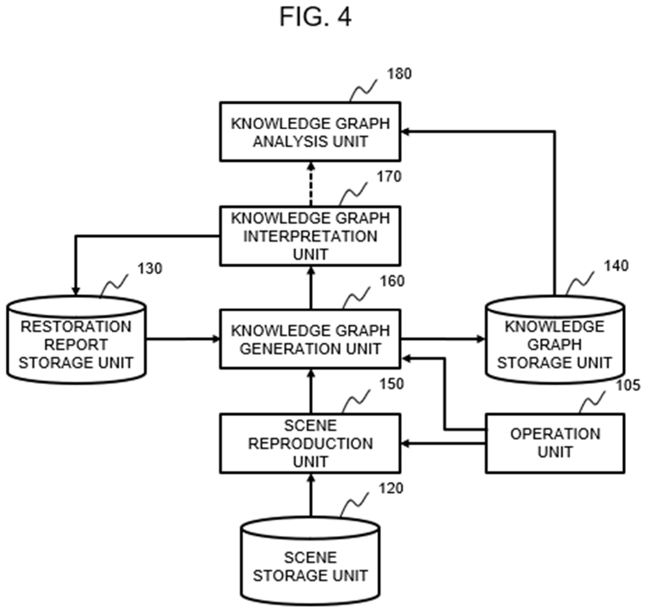

Fig. 4 is a block diagram illustrating the functions of the work simulation apparatus 190. The work simulation apparatus 190 realizes the functions of a scene reproduction unit 150, a knowledge graph generation unit 160, a knowledge graph interpretation unit 170, and a knowledge graph analysis unit 180 through a computer program executed by the processor 211 and the storage device 212, performs work simulation, and acquires a knowledge graph.

As described above, the work simulation apparatus 190 is connected to the operation unit 105. In Fig. 4, the flow of information through the connection paths is indicated by arrows. The operation unit 105 provides a function for selecting a scene to be reproduced in the virtual space by the scene reproduction unit 150, and a function for manually modifying, for example, a knowledge graph that is automatically generated from the work simulation by the knowledge graph generation unit 160.

First, the scene reproduction unit 150 of the work simulation apparatus 190 reproduces in the virtual space a scene selected by the user via the operation unit 105 from among the scenes whose 3D measurement data corresponding to respective restoration work reports are stored in the scene storage unit 120. The operation unit 105 accepts user operations such as touch operations on 3D models or selection operations on a user interface (UI), and plays a role in issuing instructions to other functional units to execute processing in accordance with the user operations.

Next, the knowledge graph generation unit 160 generates a knowledge graph related to a work flow based on both a restoration work report stored in the restoration work report storage unit 140 and a work simulation performed on the scene selected by the scene reproduction unit 150.

The knowledge graph is generated in a streaming manner, and the user can manually modify the knowledge graph being generated by the knowledge graph generation unit 160 through the operation unit 105. After the manual modification, the knowledge graph is stored in the knowledge graph storage unit 130.

Next, the knowledge graph interpretation unit 170 uses an LLM both to interpret the knowledge graph generated by the knowledge graph generation unit 160 and to update a restoration work report stored in the restoration work report storage unit 140, which has been selected by the operation unit 105 through the scene reproduction unit 150, by appending skilled knowledge 500.

Finally, the knowledge graph analysis unit 180 analyzes whether each case is a standard work or not, using all of the knowledge graphs stored in the knowledge graph storage unit 130. The execution of the knowledge graph analysis unit may be mandatory for each work simulation, or may be optionally executed by the user.

### [Scene Reproduction Unit 150]

The scene reproduction unit 150 reproduces in the virtual space a detailed work site corresponding to each restoration work report. The 3D model used to reproduce the detailed work site in the virtual space may be 3D measurement data (point cloud data) obtained by a 3D laser scanner, or may be a 3D CAD model constructed using a game engine such as Unity or Unreal Engine.

### [Knowledge Graph Generation Unit 160]

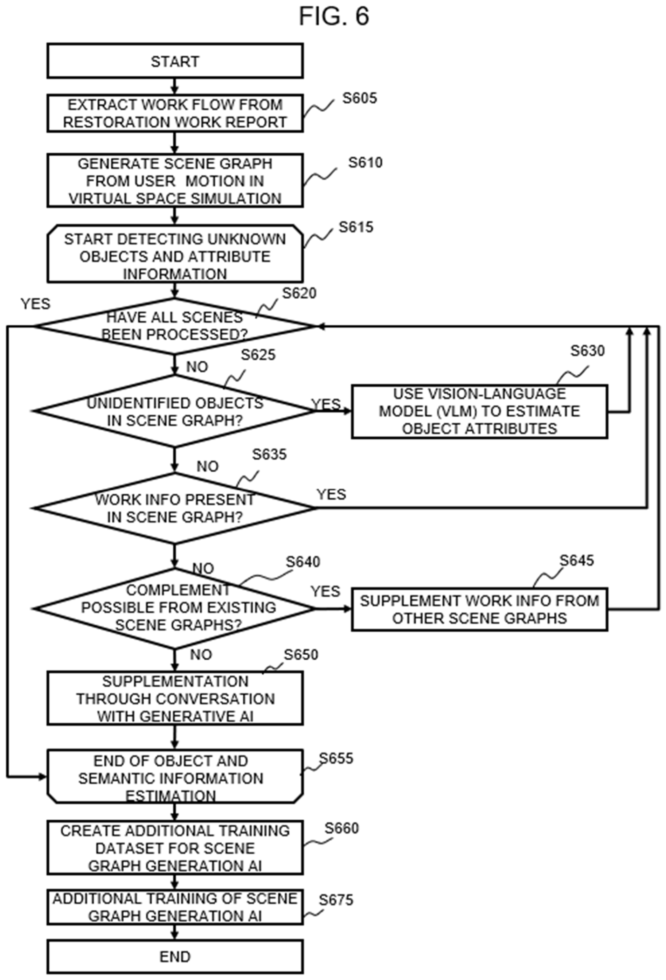

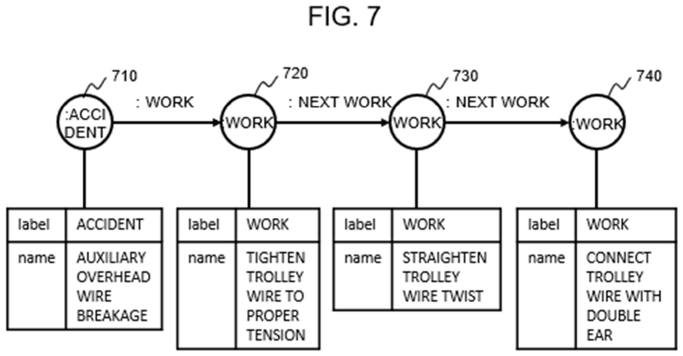

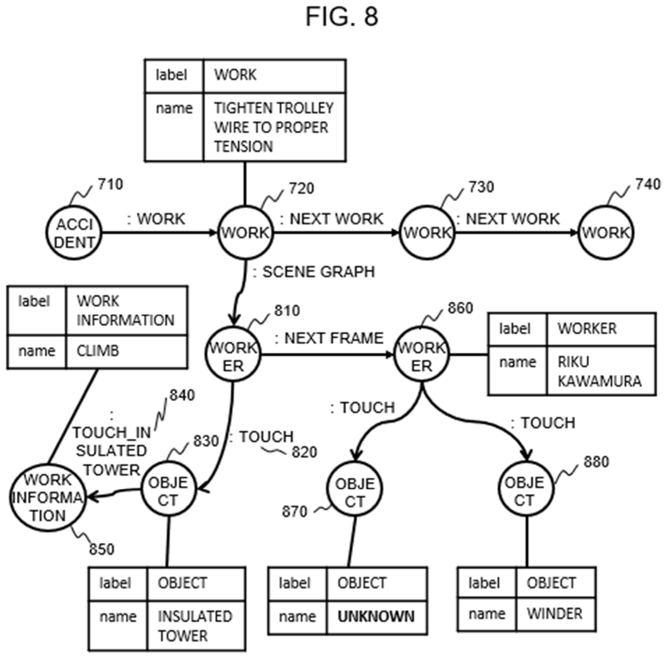

Fig. 6 shows an example flowchart of the knowledge graph generation unit 160, Fig. 7 shows an example of extracting a work flow from the restoration work report 400 shown in Fig. 4, and Fig. 8 shows an example in which an unrecognizable object exists in a scene graph. The knowledge graph generation unit 160 first extracts a work flow from the restoration work report (step 605).

From the type of accident 450 in the restoration work report, the knowledge graph generation unit 160 generates an accident node having a property of auxiliary overhead wire breakage, a work node 720 having a property of tensioning the trolley wire to proper tension from the restoration work sequence 490, a work node 730 having a property of correcting the twist of the trolley wire, and a work node 740 having a property of connecting the trolley wire with a double ear.

Next, a scene graph is generated from the user motion obtained through the work simulation in the virtual space (step 610). As shown in Fig. 8, in an example in which the scene graph is generated from the user motion, the scene graph is generated for the work node 720 corresponding to the task of tensioning the trolley wire to proper tension.

The scene graph consists of a worker (subject) node 810, an object node 830, work information 850, a relationship 820 representing a predicate between the worker node and the object node, and a relationship 840 representing a predicate and an object for identifying the work information node between the object node and the work information node. Here, one scene graph may be generated for each frame, or one scene graph may be generated by combining multiple frames.

Next, unknown objects and work information are estimated (step 615). Step 615 is repeated for all scene graphs until completion (step 655). If there is an unrecognized object in the scene graph during step 615 (step 625), a Vision-Language Model (VLM) is used to predict the unknown object (step 630).

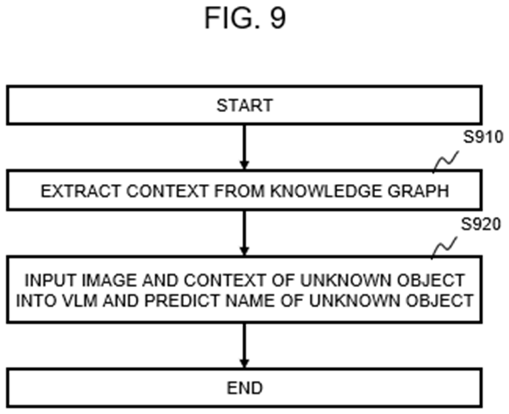

Fig. 9 shows a flowchart for predicting an unknown object using a Vision-Language Model (VLM). First, a sentence (context) describing a scene that includes the unknown object is extracted from the knowledge graph (step 910).

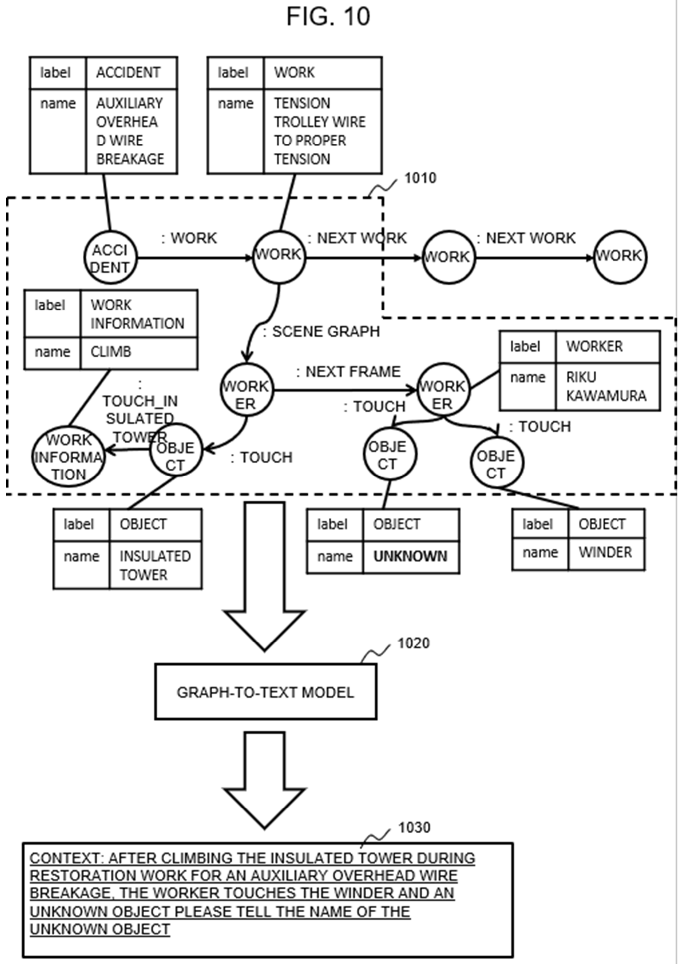

Fig. 10 illustrates an image of step 910. In Fig. 10, a context 1030 is generated by inputting a work knowledge graph 1010 into a Graph-to-Text model 1020. As a more specific example, an LLM may be employed as the Graph-to-Text model 1020, and the knowledge graph 1010 may be provided as a graph (Retrieval-Augmented Generation) to extract the context 1030.

Next, the VLM is provided with the unknown object image 1110 and the context 1030 generated in step 910, and predicts the name of the unknown object (step 920).

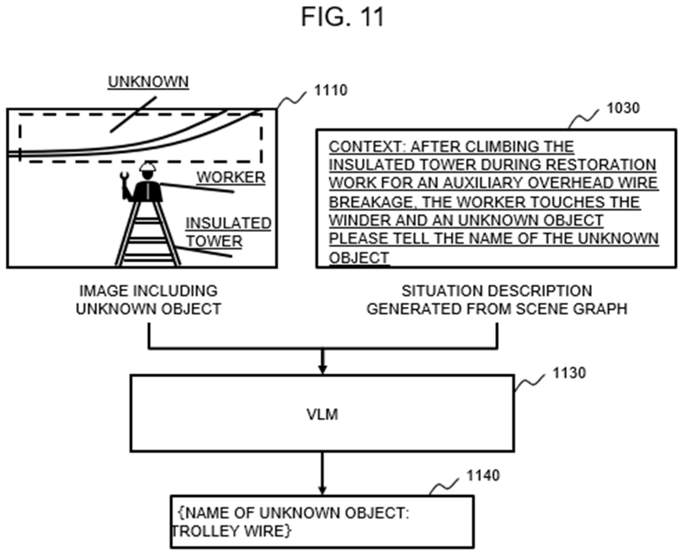

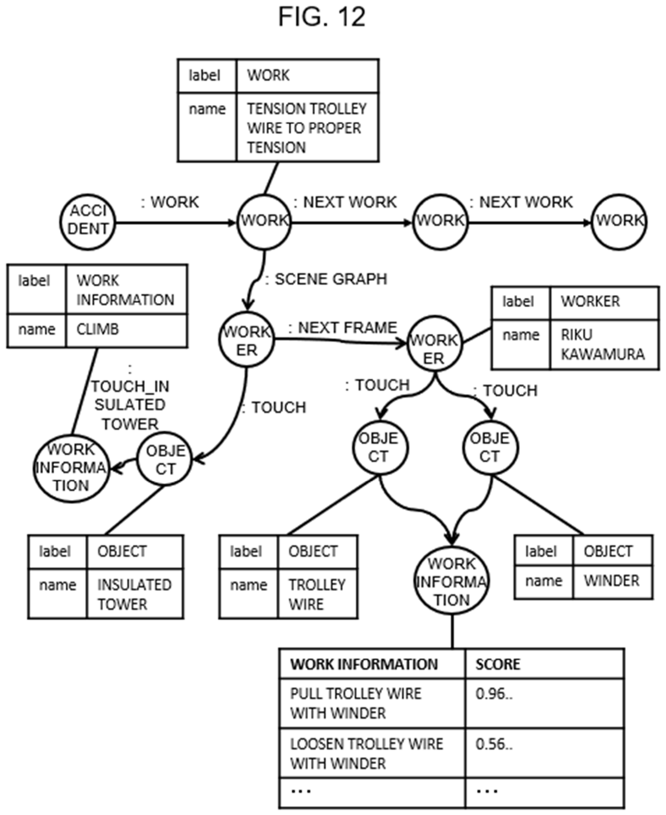

Fig. 11 illustrates an image of step 920, and Fig. 12 illustrates an image of supplementing missing information from other existing scene graphs based on graph similarity. In Fig. 11, by inputting the image 1110 of a frame containing an unknown object and the context 1030 generated in step 910 into the VLM 1130, the name of the unknown object is inferred to be a trolley wire (1140).

Next, it is checked whether work information exists in the scene graph (step 635). If not, it is checked whether the missing information can be supplemented from other existing scene graphs based on graph similarity (step 640).

At this time, a threshold value of graph similarity used for determining whether supplementation from another scene graph is possible may be arbitrarily set by the user. If a graph exceeding the threshold of graph similarity set by the user exists, the work information is supplemented from the other existing scene graphs (step 645). If no graph exceeding the threshold exists, the user supplements the missing information manually or through interaction with a generative AI (step 650).

When the estimation of unknown objects and work information has been completed for all frames (step 655), additional training dataset creation for the scene graph generation AI is performed next (step 660).

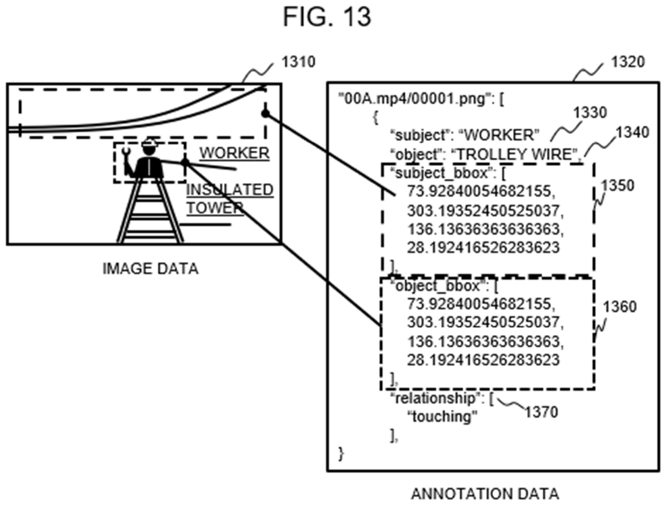

Fig. 13 shows an example of an additional training dataset for the scene graph generation AI. The additional training dataset for the scene graph generation AI consists of image data 1310 and annotation data 1320 for each frame. The annotation data 1320 includes, as essential columns, a subject 1330 indicating the name of the actor, an object 1340 indicating the name of the target, a subject_bbox 1350 indicating the bounding box of the actor, an object_bbox 1360 indicating the bounding box of the target, and a relationship 1370 indicating the relationship between the actor and the target. In addition, a column for work information may be added to the annotation data so that work information can be learned simultaneously.

Finally, additional training of the scene graph generation AI is performed using the additional training dataset generated in step 660 (step 675). In this way, even when there are unrecognized objects in the scene graph, the learning data automatically generated from such cases are continuously learned, thereby forming a lifecycle in which the recognition accuracy of the scene graph gradually improves.

### [Knowledge Graph Understanding Unit 170]

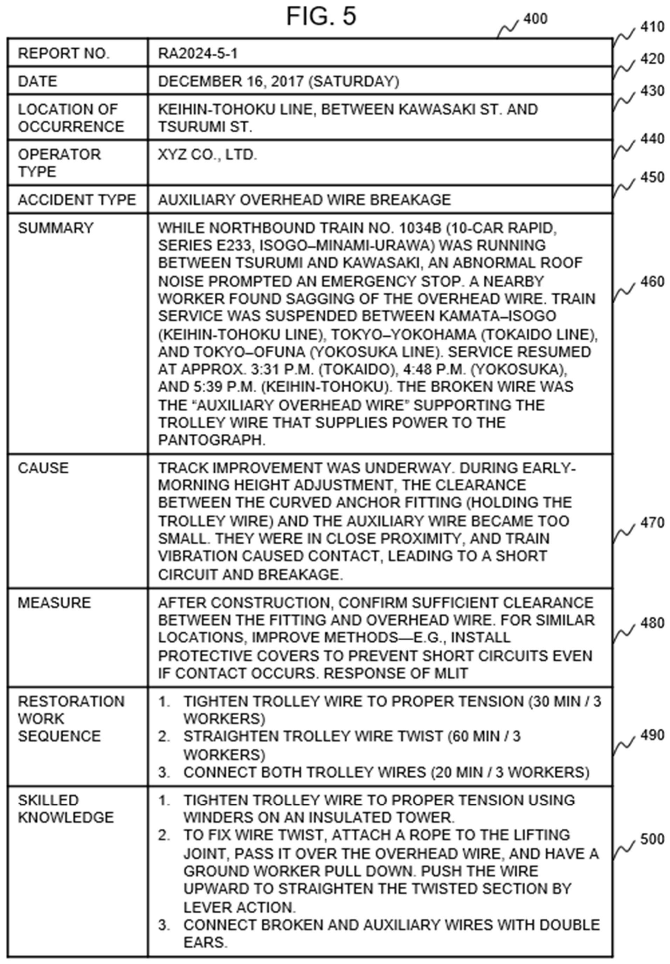

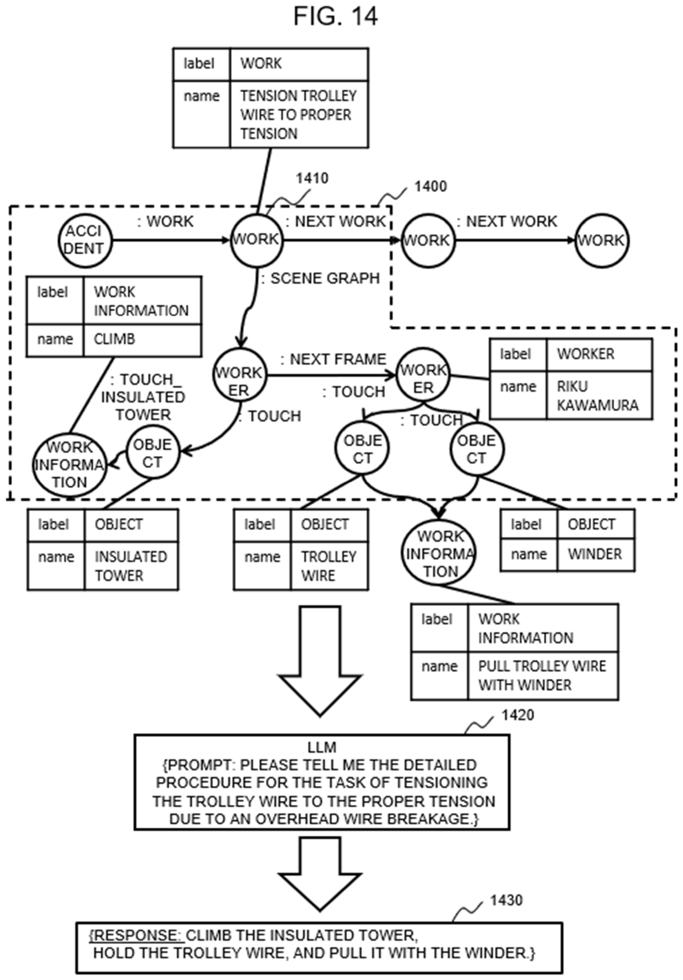

Fig. 5 shows an example in which a skilled knowledge inheritance column has been appended to a restoration work report due to a railway accident, and Fig. 14 illustrates an image of the knowledge graph interpretation unit 170 appending skilled knowledge related to the work of tightening the trolley wire to proper tension (1410).

The knowledge graph interpretation unit 170 understands the knowledge graph generated by the knowledge graph generation unit 160 and appends skilled knowledge to the restoration work report. When the processing of the knowledge graph interpretation unit 170 is completed, the skilled knowledge 500 is appended as shown in FIG. 5. The LLM 1420 receives, as a graph RAG, the restoration work report and the knowledge graph 1400 generated through a work simulation of tightening the trolley wire to a proper tension, and outputs the skilled knowledge "climb the insulating tower, hold the trolley wire, and pull it with the winder," which is then appended to the restoration work report. The knowledge graph interpretation unit 170 executes this processing for all of the work nodes 720, 730, and 740 to extract the skilled knowledge 500 shown in FIG. 5.

### [Knowledge Graph Analysis Unit 180]

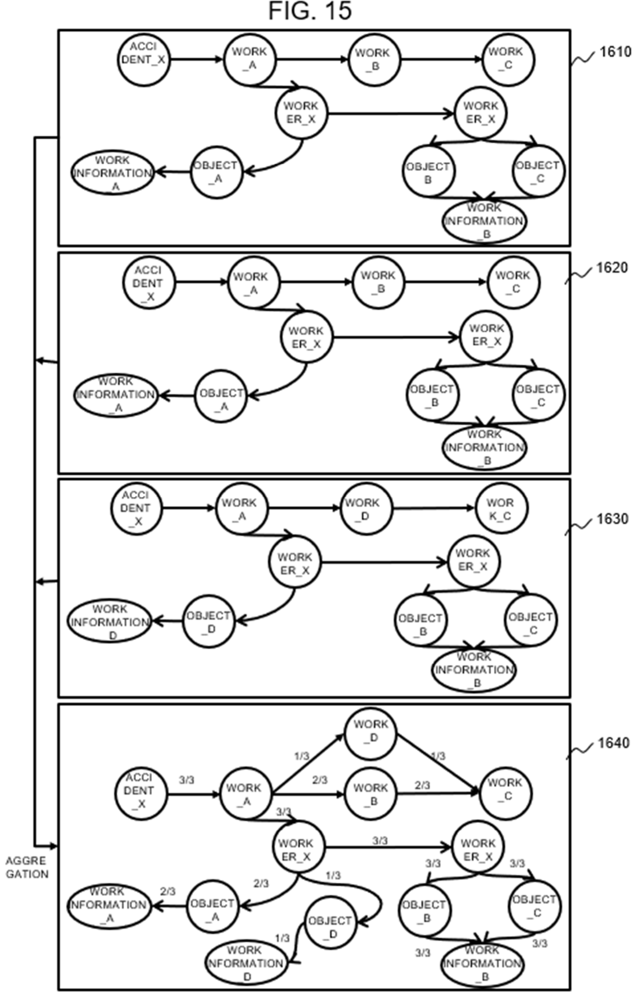

The knowledge graph analysis unit 180 uses all of the knowledge graphs stored in the knowledge graph storage unit 130 to identify standard and non-standard work for each type of case. FIG. 15 shows an example in which all knowledge graphs corresponding to a case in which the type of accident 450 is "auxiliary overhead wire breakage" are combined. By adding together the individual knowledge graphs 1610, 1620, and 1630 to construct an aggregated knowledge graph 1640, it becomes possible to identify the majority edges as standard work and the minority edges as non-standard work. The knowledge graph interpretation unit 170 and the knowledge graph analysis unit 180 together constitute a determination unit for distinguishing work types.

In this manner, by combining knowledge graphs for each type of accident 450 using all of the knowledge graphs stored in the knowledge graph storage unit 130, it is possible to distinguish between standard work and non-standard work. Furthermore, since the number of nodes and edges increases and may cause the user interface to become complex, it is preferable to implement a display control function that enables turning the display of each node type on and off to avoid complicated visualization.

### [Display Screen]

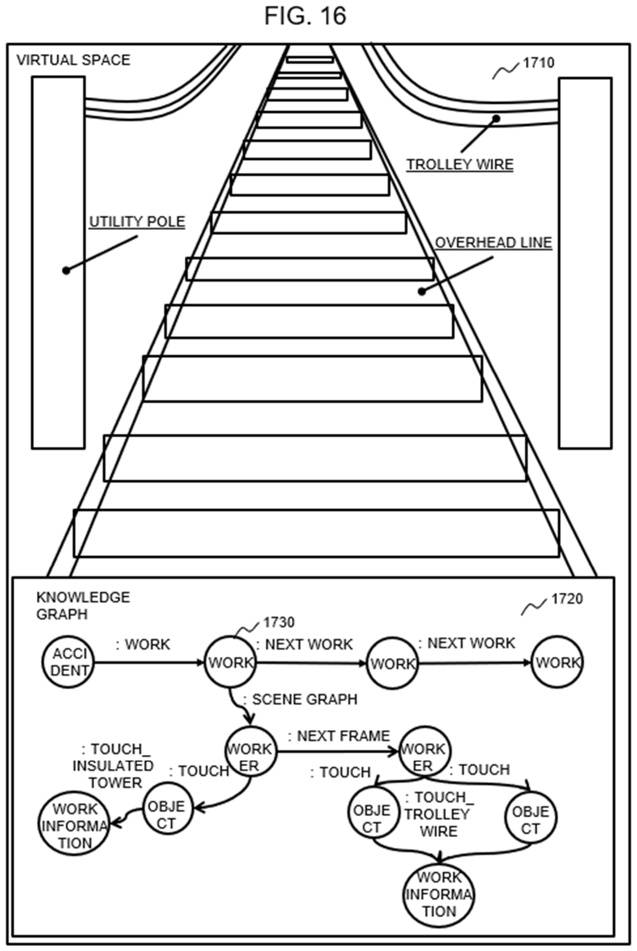

FIG. 16 shows an example of a user's viewpoint screen in the virtual space. A user performing a simulation in the virtual space displayed on the display unit 106 can confirm the scene selected by the scene reproduction unit 150 at the top portion 1710 of the screen and can check the knowledge graph being generated in real time by streaming during the work simulation at the bottom portion 1720 of the screen. The user may also manually edit the knowledge graph. The start and end of the simulation for each work can be indicated either by using voice recognition as a trigger or by a touch operation on the work node 1730 displayed on the display unit 106.

As described above, the work simulation system 110 is characterized by including: a scene reproduction unit that reproduces the actual work site in virtual space using 3D model information accumulated in the scene storage unit; a knowledge graph generation unit that generates a knowledge graph based on the restoration work report and the skilled worker's work simulation performed in the reproduced virtual space reproduced by the scene reproduction unit; a knowledge graph interpretation unit in which the LLM interprets the knowledge graph generated by the knowledge graph generation unit and appends skilled knowledge to the restoration work report; and a knowledge graph analysis unit that analyzes, using all of the knowledge graphs stored in the knowledge graph storage unit 130, whether each work related to the same case is statistically standard or non-standard.

As described above, according to Embodiment 1, a knowledge graph is constructed from the restoration work report and the skilled worker's work simulation in the virtual space. By allowing a large language model to use the knowledge graph to append skilled knowledge to the restoration work report, it becomes possible to assist in the inheritance of skilled knowledge. In addition, quantitative evaluation of worker safety based on musculoskeletal analysis can also be performed.

### [Embodiment 2]

A second embodiment of the present invention is a system that performs safety evaluation of workers by adding the results of musculoskeletal analysis. Since the overall configuration and functions are the same as those in Embodiment 1 described above, their explanation is omitted, and only the differing parts are described below.

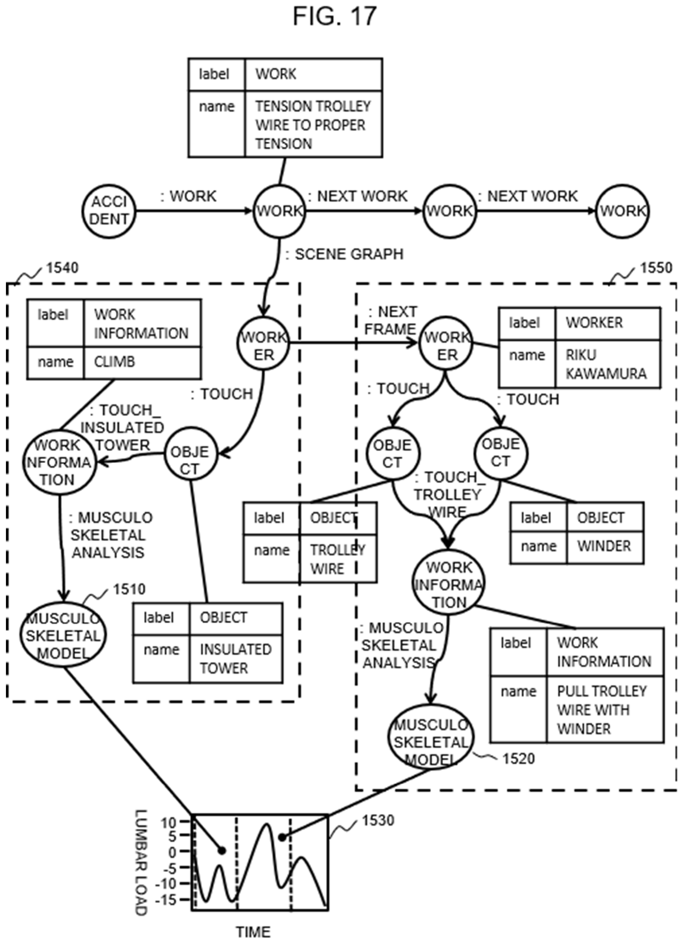

Representative examples of musculoskeletal analysis software include OpenSim and AnyBody. Figure 17 shows an image of a knowledge graph generated by the knowledge graph generation unit 160 in Embodiment 2. The difference from the knowledge graph generated by the knowledge graph generation unit 160 in Embodiment 1 is that a musculoskeletal node is added.

In Figure 17, an image is shown in which the lumbar load analysis results 1530, calculated using the Static Optimization function of OpenSim, are divided by time series information and linked to the task nodes for management. It can be seen that the task 1550 of holding the trolley wire and pulling it with a winder imposes a greater load on the lower back than the task 1540 of climbing the insulated tower.

Thus, in Embodiment 2, by linking and managing the musculoskeletal analysis results with the scene graph, it becomes possible to perform safety evaluation of workers.

The present invention is not limited to railway infrastructure maintenance work but can be applied to general maintenance operations in manufacturing, construction, and other industries. Furthermore, given the growing concern over the aging workforce, the system makes it possible to quantitatively evaluate worker safety.

Each of the above-described components, functional units, processing units, and processing means may be implemented, in whole or in part, in hardware-for example, by designing them as integrated circuits. Alternatively, they may be implemented in software, in which a processor interprets and executes a program that realizes each function. Information such as programs, tables, and files for realizing these functions can be stored in recording devices such as memory, hard disks, SSDs (Solid State Drives), IC cards, SD cards, or DVDs.

Furthermore, the arrangement of various functional units, processing units, and databases described in the above embodiments is merely an example. These arrangements can be modified to achieve the optimal configuration depending on the hardware and software performance of each device, as well as considerations of processing efficiency and communication efficiency.

In addition, the configuration (schema, etc.) of the databases storing the various kinds of data described above may be flexibly modified from the viewpoints of efficient resource utilization, improved processing efficiency, and enhanced access and search performance.

## Claims

1. A work simulation apparatus comprising:
a reproduction unit that reproduces a scene in a virtual space;
a generation unit that generates a knowledge graph based on an input restoration work report and a work simulation; and
a determination unit that interprets the generated knowledge graph, appends skilled knowledge to the restoration work report, and analyzes all of the knowledge graphs to determine whether the work is standard or non-standard.

2. The work simulation apparatus according to claim 1,
wherein three-dimensional measurement data for reproducing an actual site in the virtual space is constructed by a game engine.

3. The work simulation apparatus according to claim 1,
wherein a knowledge graph related to an accident and a restoration work is extracted from the restoration work report,
and a scene graph is generated by performing a work simulation for each work node.

4. The work simulation apparatus according to claim 3,
wherein the scene graph comprises:
a worker node,
an object node,
a work information node,
a relationship between the worker node and the object node, and
a relationship between the object node and the work information node.

5. The work simulation apparatus according to claim 1,
wherein when an unrecognized object exists in the scene graph generated during the work simulation, the unrecognized object is complemented using a Vision-Language Model (VLM).

6. The work simulation apparatus according to claim 5,
wherein when complementing the unrecognized object using the VLM, a description of the unrecognized object is generated from the knowledge graph,
and an image and context of the unrecognized object are input to the VLM to estimate the name of the unrecognized object.

7. The work simulation apparatus according to claim 1,
wherein when work information does not exist in the scene graph, the work information is complemented from another existing scene graph based on graph similarity.

8. The work simulation apparatus according to claim 7,
wherein a threshold value of graph similarity for determining whether to complement from another existing scene graph is set according to a user's operation.

9. The work simulation apparatus according to claim 1,
wherein the apparatus is connected to a storage unit that stores restoration work reports,
and appends skilled knowledge to a restoration work report stored in the storage unit by providing a scene graph as a Retrieval-Augmented Generation (RAG) graph to a Large Language Model (LLM).

10. The work simulation apparatus according to claim 1,
wherein the scene graph is linked to musculoskeletal analysis results with time-series information to evaluate worker safety.

11. The work simulation apparatus according to claim 1,
wherein the apparatus is connected to a storage unit that stores knowledge graphs,
and distinguishes standard work and non-standard work by combining the knowledge graphs in the storage unit for each case using the knowledge graph.

12. The work simulation apparatus according to claim 1,
wherein the knowledge graph is generated in a streaming manner during the work simulation,
and the knowledge graph can be checked and modified according to the user's operation in the virtual space.

13. The work simulation apparatus according to claim 1,
wherein, when signaling which work to create a scene graph for or when signaling the start and end of scene graph generation, voice or a touch operation on the displayed knowledge graph is used as a trigger.

14. A work simulation system comprising:
a virtual space;
a scene storage unit that stores scenes;
a restoration work report storage unit that stores restoration work reports;
a knowledge graph storage unit that stores knowledge graphs;
a selection unit that selects, from among the scenes stored in the scene storage unit, a scene in which a work simulation is to be performed in the virtual space;
a knowledge graph generation unit that generates a knowledge graph based on a restoration work report stored in the restoration work report storage unit and the work simulation; and
a determination unit that appends skilled knowledge to the restoration work report using the knowledge graph generated by the knowledge graph generation unit and,
optionally, determines whether the work in a given case is standard or non-standard using all of the knowledge graphs stored in the knowledge graph storage unit.

15. A work simulation method for simulating work by a work simulation apparatus, the method comprising:
reproducing a scene in a virtual space;
generating a knowledge graph based on a restoration work report and a work simulation stored in a memory; and
interpreting the knowledge graph, appending skilled knowledge to the restoration work report, and analyzing all of the knowledge graphs to determine whether the work is standard or non-standard.
